# EUROPÄISCHE PATENTSCHRIFT

(11) **EP 3 738 684 B1**
(45) Veröffentlichungstag und Bekanntmachung des Hinweises auf die Patenterteilung: **03.01.2024**
(21) Anmeldenummer: 20153367.6
(22) Anmeldetag: 23.01.2020
(51) Int. Cl.: B08B 3/02, F24S 40/20, H02S 40/10

(54) **VORRICHTUNG ZUR BEHANDLUNG GLATTER FLÄCHEN, INSBESONDERE DER OBERFLÄCHE VON PHOTOVOLTAIK- UND SOLARANLAGEN**
DEVICE FOR TREATING SMOOTH SURFACES, IN PARTICULAR THE SURFACE OF PHOTOVOLTAIC AND SOLAR INSTALLATIONS
DISPOSITIF DE TRAITEMENT DES SURFACES LISSES, EN PARTICULIER DE LA SURFACE DES INSTALLATIONS PHOTOVOLTAÏQUES ET SOLAIRES

(30) Priorität: 13.03.2019 DE 202019101423 U
(43) Veröffentlichungstag der Anmeldung: 18.11.2020
(73) Patentinhaber: Ehleuter, Franz, 87760 Lachen (DE)
(72) Erfinder: Ehleuter, Franz, 87760 Lachen (DE)
(74) Vertreter: Charrier Rapp & Liebau

(56) Entgegenhaltungen:
- WO-A1-2011/029416
- DE-U1-202011 105 493
- US-A1- 2011 094 542
- US-A1- 2014 115 815

## Beschreibung

Die Erfindung betrifft eine Vorrichtung zur Behandlung glatter Flächen, insbesondere der Oberfläche von Solaranlagen, Photovoltaikanlagen, Glasdächern oder Glasfassaden, nach dem Oberbegriff des Patentanspruchs 1.

Eine derartige Vorrichtung zur Behandlung glatter Oberflächen ist aus der US 2011/0094542 A1 bekannt. Die dort offenbarte Reinigungsvorrichtung weist ein Sprühaggregat mit einem Tragrohr und einer Sprüheinrichtung mit mehreren an einem Träger nebeneinander angeordneten Sprühdüsen auf. Die Reinigungsvorrichtung weist auch eine Tragkonstruktion mit einem aus einem inneren Armteil und einem äußeren Armteil bestehenden Tragarm zur Positionierung und Halterung des Sprühaggregats auf. An dem Träger der Sprüheinrichtung sind mit einer entsprechenden Steuerung verbundene Tastrollen zur Einhaltung eines vorbestimmten Abstands des Trägers von der zu reinigenden Oberfläche angeordnet.

Eine aus der WO 2011/029416 A1 bekannte Behandlungsvorrichtung weist ein Behandlungsaggregat und eine Tragkonstruktion mit einem schwenkbaren Tragarm zur Positionierung und Halterung des Behandlungsaggregats auf. Das Behandlungsaggregat enthält eine Sprüheinrichtung und mehrere Waschbürsten. An dem Behandlungsaggregat sind vordere und hintere Laufräder zur Abstützung des Behandlungsaggregats auf den zu reinigenden Solarpaneelen angeordnet.

In der US 2014/115815 A1 ist eine Reinigungsvorrichtung mit einer an einem Fahrzeug über eine Tragarmanordnung schwenkbar angeordneten Waschbürste offenbart. Der Waschbürste sind Sprühdüsen vor- und nachgeordnet.

Eine aus der DE 20 2011 105 493 U1 bekannte Reinigungsvorrichtung weist eine Reinigungseinheit mit einer an einem Träger drehbar gelagerten und durch einen Antrieb um ihre Längsachse drehbaren Reinigungsbürste und eine Tragkonstruktion mit einem schwenkbaren Tragarm zur Positionierung und Halterung der Reinigungseinheit auf. Die Reinigungsvorrichtung enthält außerdem eine Lastausgleichseinrichtung, durch welche der von der Reinigungsbürste auf die zu reinigende Oberfläche ausgeübte Druck nicht nur auf einen gewünschten Wert eingestellt, sondern auch beibehalten werden kann, wenn ein die Reinigungsvorrichtung transportierendes Fahrzeug während der Reinigung über Bodenunebenheiten fährt. Dadurch können unerwünschte Beschädigungen an den zu reinigenden Flächen vermieden werden.

Aufgabe der Erfindung ist es, eine Vorrichtung zur Behandlung glatter Flächen der eingangs genannten Art zu schaffen, die ein optimiertes Aufbringen von Fluiden oder anderen Medien auf glatte Oberflächen ermöglicht.

Diese Aufgabe wird durch eine Vorrichtung zur Behandlung glatter Flächen mit den Merkmalen des Anspruchs 1 gelöst. Zweckmäßige Ausgestaltungen und vorteilhafte Weiterbildungen der Erfindung sind in den Unteransprüchen angegeben.

Bei der erfindungsgemäßen Vorrichtung ist an dem als Sprühaggregat mit einer Sprüheinrichtung ausgebildeten Behandlungsaggregat mindestens ein Stützrad zur Abstützung des Behandlungsaggregats auf der zu behandelnden Oberfläche angeordnet. Das Behandlungsaggregat ist durch einen Antrieb drehbar an dem Tragarm der Tragkonstruktion angeordnet. Dadurch kann das Behandlungsaggregat so ausgerichtet werden, dass die Stützrollen oder Stützräder in Bewegungsrichtung der Sprühvorrichtung vor dieser angeordnet sind. Mit Hilfe der Lastausgleichseinrichtung und dem Stützrad oder den Stützrädern bzw. Stützrollen kann ein von dem Behandlungsaggregat auf die zu reinigende Oberfläche ausgeübter Druck nicht nur auf einen gewünschten Wert eingestellt, sondern auch beibehalten werden, wenn ein die Behandlungsvorrichtung transportierendes Fahrzeug während der Behandlung über Bodenunebenheiten fährt. Dadurch kann die Behandlungsqualität optimiert werden. Außerdem können durch das Behandlungsaggregat bedingte Beschädigungen an den zu behandelnden Oberflächen vermieden werden.

Um eine optimale Druckverteilung zu erreichen, sind an dem Behandlungsaggregat vorzugsweise mehrere der Sprüheinrichtung in deren Bewegungsrichtung vorgeordnete Stützrollen oder Stützräder vorgesehen. Die Stützrollen oder Stützräder können zweckmäßigerweise an rechtwinklig von einem Tragrohr des Behandlungsaggregats vorstehenden Stützen drehbar gelagert sein. Vorzugsweise können die Stützrollen oder Stützräder verstellbar an den Stützen angeordnet sind. Dadurch kann z.B. die Höhe oder der Abstand der Stützrollen oder Stützräder verändert bzw. an die jeweiligen Anforderungen angepasst werden.

Die Sprüheinrichtung kann zweckmäßigerweise an der Unterseite des Tragrohrs angeordnet sein. An dem Tragrohr kann ein Gehäuse zur Abschirmung der Sprüheinrichtung vorgesehen sein.

Der Tragarm der Tragkonstruktion kann an einem Traggestell über einen Drehantrieb drehbar angeordnet sein. Der Antrieb zur Drehung des Behandlungsaggregats und der Drehantrieb zur Drehung des Tragarms können zweckmäßigerweise gekapselt und von einem entsprechenden Gehäuse vollständig umschlossen sein, so dass die Antriebselemente optimal vor Verschmutzung oder Beschädigungen geschützt sind.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: eine erfindungsgemäße Vorrichtung zur Behandlung glatter Flächen in einer Perspektivansicht;
- **Figur 2**: die Vorrichtung zur Behandlung glatter Flächen von Figur 1 in einer Seitenansicht;
- **Figur 3**: die Vorrichtung zur Behandlung glatter Flächen von Figur 1 in einer Draufsicht und
- **Figur 4**: die Vorrichtung zur Behandlung glatter Flächen von Figur 1 in einer Vorderansicht.

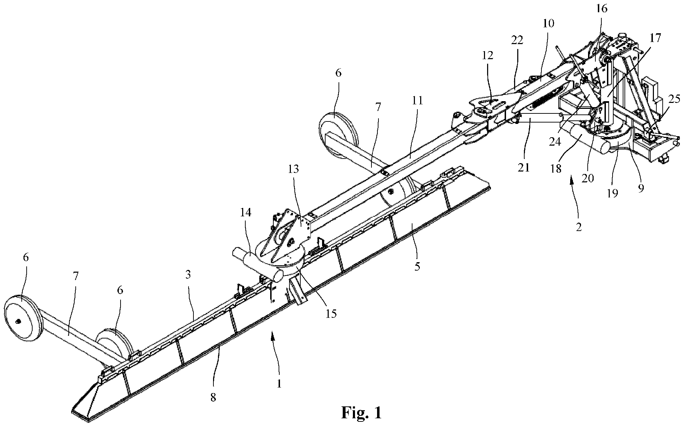

Die in den Figuren 1 bis 4 in unterschiedlichen Ansichten schematisch dargestellte Vorrichtung zur Behandlung gerader Flächen, insbesondere der Oberfläche von Photovoltaik- und Solaranlagen, Glasdächern oder Glasfassaden ist zur Montage an einem Traktor oder einem anderen geeigneten Fahrzeug konzipiert. Die Vorrichtung enthält ein über der zu behandelnden Oberfläche positionierbares Behandlungsaggregat 1 und eine Tragkonstruktion 2 zur Positionierung und Halterung des Behandlungsaggregats 1.

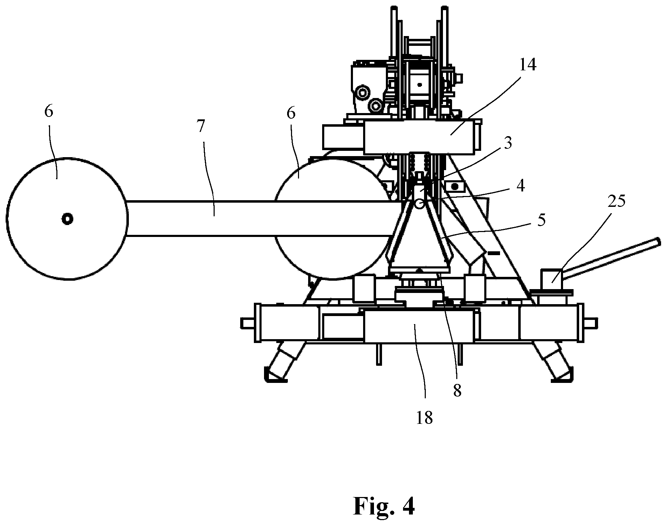

Das Behandlungsaggregat 1 ist bei der gezeigten Ausführung als Sprühaggregat mit einem ca. 4m langen Tragrohr 3 und einer in Figur 4 erkennbaren Sprüheinrichtung 4 ausgeführt. Wie aus Figur 4 hervorgeht, kann die Sprüheinrichtung 4 z.B. ein an der Unterseite des Tragrohrs 3 angeordnetes Sprührohr mit nach unten offenen Sprühdüsen zum Aufsprühen eines Fluid oder eines anderen Mediums auf die Oberfläche von Photovoltaik- und Solarpaneelen oder dgl. sein. An dem Tragrohr 3 ist ein nach unten offenes Gehäuse 5 zur Abschirmung der Sprühvorrichtung 4 angebracht. Durch dieses Gehäuse 5 soll verhindert werden, dass das von dem Sprüheinrichtung 4 nach unten gesprühte Fluid durch den Fahrtwind unkontrolliert verteilt wird.

Das Behandlungsaggregat 1 weist in dem dargestellten Ausführungsbeispiel mehrere dem Tragrohr 3 bzw. der Sprüheinrichtung 4 in deren Bewegungsrichtung vorgeordnete Stützrollen oder Stützräder 6 zur Abstützung des Behandlungsaggregats 1 auf der zu behandelnden Oberfläche auf. Die Stützrollen oder Stützräder 6 sind an rechtwinklig zum Tragrohr 3 angeordneten Stützen 7 drehbar angeordnet. Bei der gezeigten Ausführung sind an dem Behandlungsaggregats 1 zwei senkrecht vom Tragrohr 3 vorstehende Stützen 5 mit jeweils zwei an gegenüberliegenden Seiten angeordneten Stützrollen oder Stützrädern 6 vorgesehen. Die Stützrollen oder Stützrädern 6 können an den Stützen 7 so verstellbar angeordnet sein, dass sowohl die Höhe der Stützrollen oder Stützräder 6 bezüglich der Stützen 7 als auch der Abstand der Stützrollen oder Stützräder 6 zueinander veränderbar ist.

Wie aus Figur 4 hervorgeht, sind die Stützen 7 und die Stützrollen oder Stützräder 6 derart ausgeführt und angeordnet, dass beim Aufsetzen der Stützrollen oder Stützräder 6 auf eine Oberfläche ein Abstand zwischen einer Unterseite 8 des Gehäuses 5 und der zu behandelnden Oberfläche besteht. Dadurch kann verhindert werden, dass die zu behandelnden Oberflächen von dem Gehäuse 5 des Behandlungsaggregats 1 beschädigt werden.

Die Tragkonstruktion 2 umfasst einen an einem Traggestell 9 schwenkbar angeordneten Tragarm, der bei der hier gezeigten Ausführung aus zwei gelenkig miteinander verbundenen Armteilen 10 und 11 besteht. Die beiden Armteile 10 und 11 sind über ein Gelenkstück 12 miteinander verbunden, so dass das äußere Armteil 11 mit dem daran montierten Behandlungsaggregat 1 zum Transport eingeklappt werden kann. An dem vorderen Ende des äußeren Armteils 11 ist das Tragrohr 3 des Behandlungsaggregats 1 über eine Halterung 13 und einen Drehantrieb mit einem Motor 14 und einem Getriebe 15 drehbar montiert. Über den Drehantrieb mit dem Motor 14 und dem Getriebe 15 kann das Tragrohr 3 des Behandlungsaggregats 1 so ausgerichtet werden, dass die Stützrollen oder Stützräder 6 in Bewegungsrichtung des Tragrohrs 3 vor diesem angeordnet sind.

Der innere Armteil 10 des Tragarms ist über ein Gelenkteil 16 um eine Horizontalachse schwenkbar am oberen Ende einer um eine Vertikalachse drehbare Tragstütze 17 angelenkt. Die rohrförmige Tragstütze 17 ist an dem Traggestell 9 um eine Vertikalachse drehbar gelagert und kann durch einen aus einem Motor 18 und einem Getriebe 19 gebildeten Antrieb gedreht werden. Dadurch kann der Tragarm mit dem daran angeordneten Behandlungsaggregat 1 seitlich in eine gewünschte Stellung verschwenkt werden. Durch einen zwischen einem Halteteil 20 am unteren Ende der Tragstütze 17 und dem inneren Armteil 10 angeordneten Aushubzylinder 21 ist der innere Armteil 10 des Tragarms gegenüber der Tragstütze 17 abgestützt. Über den Aushubzylinder 21 kann die Höhe des Tragarms eingestellt werden. Zwischen dem inneren Armteil 10 und dem äußeren Armteil 11 ist ein in Figur 1 erkennbarer Knickzylinder 22 vorgesehen. Über das als Dreipunktaufhängung ausgeführte Traggestell 9 kann die Vorrichtung zur Behandlung glatter Flächen z.B. an der üblicherweise mit einer Dreipunkt-Anhängerkupplung versehenen Vorderseite eines Traktors oder eines anderen geeigneten Fahrzeugs angeordnet werden.

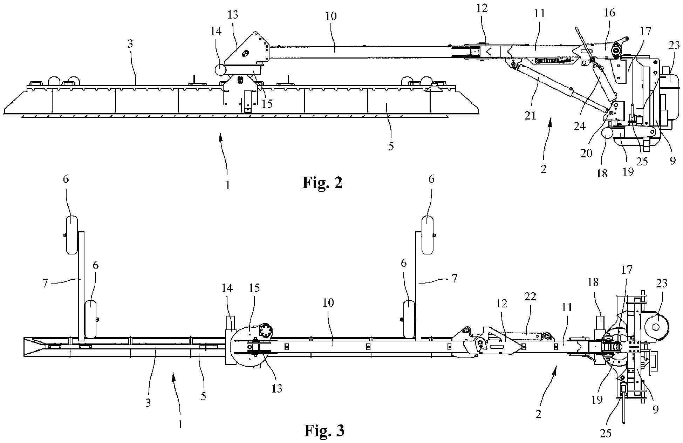

Wie aus Figur 3 hervorgeht, ist an der Tragkonstruktion 2 ferner eine Lastausgleichseinrichtung angeordnet, durch welche der von dem Behandlungsaggregat 1 über die Stützräder 6 auf die zu reinigende Oberfläche ausgeübte Druck nicht nur auf einen gewünschten Wert eingestellt, sondern auch beibehalten werden kann, wenn ein die Reinigungsvorrichtung transportierendes Fahrzeug während der Reinigung über Bodenunebenheiten fährt. Der das Behandlungsaggregat 1 haltende Tragarm reguliert sich über die Lastausgleichseinrichtung automatisch nach, so dass ein Niveauausgleich erfolgen und der Auflagedruck oder Anpressdruck des Behandlungsaggregats 1 unabhängig von evtl. auftretenden Bodenunebenheiten konstant gehalten werden kann. Dadurch können Beschädigungen an den zu reinigenden Flächen vermieden werden.

Die Lastausgleichseinrichtung wird durch einen an dem Traggestell 9 angeordneten, in den Figuren 2 und 3 gezeigten Druckspeicher 23 und einen zugehörigen Ausgleichszylinder 24 gebildet. Durch den zwischen dem inneren Armteil 10 und der Tragstütze 17 angeordneten Ausgleichszylinder 24 wird der Tragarm gegenüber der Tragstütze 14 abgestützt. Der Druckspeicher 23 ist als Druckbehälter ausgeführt, der teilweise mit Hydraulikflüssigkeit und teilweise mit Luft oder einem anderen gasförmigen Medium beaufschlagt wird. Mittels einer Handpumpe 25 kann der Anpressdruck eingestellt werden. Durch die Verbindung des Druckspeichers 23 mit dem Ausgleichszylinder 24 kann ein Lastausgleich erfolgen und eine Niveauregulierung durchgeführt werden.

Die Motoren 14 und 18 und auch die Getriebe 15 und 19 sind gekapselt und von einem entsprechenden Gehäuse vollständig umschlossen, so dass die Antriebselemente optimal vor Verschmutzung oder Beschädigungen geschützt sind. Dadurch kann vermieden werden, dass ein von dem Reinigungselement während des Reinigungsvorgangs aufgewirbelter Staub oder Schmutz in den Antrieb gelangt und zu dadurch bedingten Funktionsstörungen führt. Die Getriebe 15 und 19 sind vorzugsweise als selbsthemmendes Getriebe ausgeführt. Dadurch kann eine hohe Sicherheit gegen unerwünschte Verstellung des Tragarms erreicht werden.

Das Einsatzgebiet der vorstehend beschriebenen Behandlungsvorrichtung ist nicht nur auf die Behandlung von Solar- oder Photovoltaikanlagen beschränkt. Auch zum Auftragen von unterschiedlichen Medien auf größere Fensterflächen oder Fassaden wäre die Vorrichtung einsetzbar.

### Bezugszeichenliste

- 1: Behandlungsaggregat
- 2: Tragkonstruktion
- 3: Tragrohr
- 4: Sprüheinrichtung
- 5: Gehäuse
- 6: Stützrolle oder Stützrad
- 7: Stütze
- 8: Unterseite des Gehäuses
- 9: Traggestellt
- 10: Inneres Armteil
- 11: Äußeres Armteil
- 12: Gelenkstück
- 13: Halterung
- 14: Motor
- 15: Getriebe
- 16: Gelenkteil
- 17: Tragstütze
- 18: Motor
- 19: Getriebe
- 20: Halteteil
- 21: Aushubzylinder
- 22: Knickzylinder
- 23: Druckspeicher
- 24: Ausgleichszylinder
- 25: Handpumpe

## Patentansprüche

1. Vorrichtung zur Behandlung glatter Oberflächen, die ein als Sprühaggregat mit einem Tragrohr (3) und einer Sprüheinrichtung (4) ausgebildetes Behandlungsaggregat (1) mit mehreren der Sprüheinrichtung (4) in deren Bewegungsrichtung vorgeordneten Stützrollen oder Stützrädern (6) zur Abstützung des Behandlungsaggregats (1) auf der zu behandelnden Oberfläche und eine Tragkonstruktion (2) mit einem schwenkbaren Tragarm (10, 11) zur Positionierung und Halterung des Behandlungsaggregats (1) enthält, wobei der Tragarm (10, 11) einen inneren Armteil (10) und einen mit diesem gelenkig verbunden äußeren Armteil (11) aufweist, **dadurch gekennzeichnet, dass** an der Tragkonstruktion (2) eine Lastausgleichseinrichtung (23, 24) zur Einstellung und automatischen Regulierung des von dem Behandlungsaggregat (1) über die Stützrollen oder Stützräder (6) auf die zu behandelnde Oberfläche wirkenden Anpressdrucks angeordnet ist und dass das Tragrohr (3) des Behandlungsaggregats (1) über eine Halterung (13) und einen Drehantrieb mit einem Motor (14) und einem Getriebe (15) an dem vorderen Ende der äußeren Armteils (11) derart drehbar montiert ist, dass das Tragrohr (3) über den Drehantrieb mit dem Motor (14) und dem Getriebe (15) so ausgerichtet werden kann, dass die Stützrollen oder Stützräder (6) in Bewegungsrichtung des Tragrohrs (3) vor diesem angeordnet sind.

2. Vorrichtung nach Anspruch 1, **dadurch gekennzeichnet, dass** die Stützrollen oder Stützräder (6) an rechtwinklig von dem Tragrohr (3) des Behandlungsaggregats (4) vorstehenden Stützen (7) drehbar gelagert sind.

3. Vorrichtung nach Anspruch 2, **dadurch gekennzeichnet, dass** die Stützrollen oder Stützräder (6) verstellbar an den Stützen (7) angeordnet sind.

4. Vorrichtung nach einem der Ansprüche 1 bis 3, **dadurch gekennzeichnet, dass** die Sprüheinrichtung (4) an der Unterseite des Tragrohrs (4) angeordnet ist.

5. Vorrichtung nach einem der Ansprüche 1 bis 4, **dadurch gekennzeichnet, dass** an dem Tragrohr (3) ein Gehäuse (5) zur Abschirmung der Sprüheinrichtung (4) angeordnet ist.

6. Vorrichtung nach einem der Ansprüche 1 bis 5, **dadurch gekennzeichnet, dass** der Tragarm (9, 10) an einem Traggestell (9) über einen Drehantrieb (18, 19) drehbar angeordnet ist.

7. Vorrichtung nach einem der Ansprüche 1 bis 6, **dadurch gekennzeichnet, dass** der innere Armteil (10) über ein Gelenkteil (16) um eine Horizontalachse schwenkbar an einer um eine Vertikalachse drehbaren Tragstütze (17) angelenkt ist.

8. Vorrichtung nach einem der Ansprüche 1 bis 7, **dadurch gekennzeichnet, dass** die Lastausgleichseinrichtung (23, 24) durch einen Druckspeicher (23) und einem mit dem Druckspeicher (23) verbundenen Ausgleichszylinder (24) gebildet wird.

## Claims

1. Device for treating smooth surfaces, which contains a treatment unit (1) designed as a spraying unit with a supporting tube (3) and a spraying device (4), wherein the treatment unit (1) has a plurality of support rollers or support wheels (6) arranged in front of the spraying device (4) in the direction of movement for supporting the treatment unit (1) on the surface to be treated and a supporting structure (2) with a pivotable support arm (10, 11) for positioning and holding of the treatment unit (1), wherein the support arm (10, 11) has an inner arm section (10) and an outer arm section (11) hingedly connected thereto, **characterized in that** a load balancing device (23, 24) for adjusting and automatically regulating the contact pressure exerted by the treatment unit (1) via the support rollers or support wheels (6) on the surface to be treated is arranged on the supporting structure (2), and **in that** the supporting tube (3) of the treatment unit (1) is rotatably mounted on the front end of the outer arm section (11) via a fixture (13) and a rotary actuator with a motor (14) and a gear (15) in such a way that the supporting tube (3) can be aligned via the rotary actuator with the motor (14) and the gear (15) in such a way that the support rollers or support wheels (6) are arranged in front of the supporting tube (3) in the direction of movement of the latter.

2. Device according to claim 1, **characterized in that** the support rollers or support wheels (6) are rotatably mounted on supports (7) projecting at right angles from the supporting tube (3) of the treatment unit (4).

3. Device according to claim 2, **characterized in that** the support rollers or support wheels (6) are arranged adjustably on the support profiles (7).

4. Device according to one of claims 1 to 3, **characterized in that** the spraying device (4) is arranged on the underside of the supporting tube (4).

5. Device according to one of claims 1 to 4, **characterized in that** a housing (5) for shielding the spraying device (4) is arranged on the supporting tube (3).

6. Device according to one of claims 1 to 5, **characterized in that** the support arm (9, 10) is arranged rotatably on a support frame (9) via a rotary actuator (18, 19).

7. Device according to one of the claims 1 to 6, **characterized in that** the inner arm section (10) is articulated via an articulated part (16) so as to be pivotable about a horizontal axis to a support brace (17) which is rotatable about a vertical axis.

8. Device according to one of claims 1 to 7, **characterized in that** the load balancing device (23, 24) is formed by a pressure accumulator (23) and an equalizing cylinder (24) connected to the pressure accumulator (23).

## Revendications

1. Dispositif de traitement de surfaces lisses qui contient un groupe de traitement (1), conçu en tant que groupe de pulvérisation avec un tube porteur (3) et un équipement de pulvérisation (4), avec plusieurs galets d'appui ou roues d'appui (6) agencés en amont de l'équipement de pulvérisation (4) dans sa direction de mouvement pour l'appui du groupe de traitement (1) sur la surface à traiter, et une structure porteuse (2) avec un bras porteur (10, 11) pivotant pour le positionnement et la fixation du groupe de traitement (1), dans lequel le bras porteur (10, 11) présente une partie de bras intérieure (10) et une partie de bras extérieure (11) reliée de façon articulée à celle-ci, **caractérisé en ce qu'**un équipement d'équilibrage de charge (23, 24) est agencé contre la structure porteuse (2) pour le réglage et la régulation automatique de la pression d'appui agissant depuis le groupe de traitement (1) via les galets d'appui ou roues d'appui (6) sur la surface à traiter et **en ce que** le tube porteur (3) du groupe de traitement (1) est monté en rotation via une fixation (13) et un entraînement en rotation avec un moteur (14) et une transmission (15) à l'extrémité avant de la partie de bras extérieure (11) de sorte que le tube porteur (3) puisse être orienté via l'entraînement en rotation avec le moteur (14) et la transmission (15) de sorte que les galets d'appui ou roues d'appui (6) soient agencés avant le tube porteur (3) dans la direction de mouvement de celui-ci.

2. Dispositif selon la revendication 1, **caractérisé en ce que** les galets d'appui ou roues d'appui (6) sont montés en rotation contre des appuis (7) dépassant perpendiculairement depuis le tube porteur (3) du groupe de traitement (4).

3. Dispositif selon la revendication 2, **caractérisé en ce que** les galets d'appui ou roues d'appui (6) sont agencés contre les appuis (7) de façon réglable.

4. Dispositif selon l'une des revendications 1 à 3, **caractérisé en ce que** l'équipement de pulvérisation (4) est agencé contre le côté inférieur du tube porteur (4).

5. Dispositif selon l'une des revendications 1 à 4, **caractérisé en ce qu'**un logement (5) est agencé contre le tube porteur (3) pour la protection de l'équipement de pulvérisation (4).

6. Dispositif selon l'une des revendications 1 à 5, **caractérisé en ce que** le bras porteur (9, 10) est agencé en rotation contre un bâti porteur (9) via un entraînement en rotation (18, 19).

7. Dispositif selon l'une des revendications 1 à 6, **caractérisé en ce que** la partie de bras intérieure (10) est articulée autour d'un axe horizontal via une partie d'articulation (16) et de façon pivotante contre un appui porteur (17) en rotation autour d'un axe vertical.

8. Dispositif selon l'une des revendications 1 à 7, **caractérisé en ce que** l'équipement d'équilibrage de charge (23, 24) est formé par un accumulateur de pression (23) et un cylindre d'équilibrage (24) relié à l'accumulateur de pression (23).
